# EUROPÄISCHE PATENTSCHRIFT

(11) **EP 1 111 758 B1**
(45) Veröffentlichungstag und Bekanntmachung des Hinweises auf die Patenterteilung: **18.01.2006**
(21) Anmeldenummer: 00403619.0
(22) Anmeldetag: 21.12.2000
(51) Int. Cl.: H02K 5/14, H02K 5/22, H02K 23/66

(54) **Getriebemotor, insbesondere Wischergetriebemotor für ein Fahrzeug**
Gear motor, in particularly wiper motor for motor vehicles
Motoréducteur, notamment moteur d'essuie-glace pour véhicules

(30) Priorität: 24.12.1999 DE 19963158
(43) Veröffentlichungstag der Anmeldung: 27.06.2001
(73) Patentinhaber: Valeo Wischersysteme GmbH, 74321 Bietigheim-Bissingen (DE)
(72) Erfinder: Walther, Bernd, 74321 Bietigheim-Bissingen (DE); Ade, Rolf, 74321 Bietigheim-Bissingen (DE)
(74) Vertreter: Jahn, Wolf-Diethart

(56) Entgegenhaltungen:
- FR-A- 2 750 811
- FR-A- 2 754 952
- US-A- 5 196 750
- US-A- 5 939 812
- PATENT ABSTRACTS OF JAPAN vol. 1997, no. 08, 29. August 1997 (1997-08-29) -& JP 09 093891 A (SAWAFUJI ELECTRIC CO LTD), 4. April 1997 (1997-04-04)

## Beschreibung

Die Erfindung betrifft einen Getriebemotor, insbesondere einen Wischergetriebemotor für ein Fahrzeug, mit einem von einem Motorengehäuse umgebenen Elektromotor, mit einem an der Antriebswelle des Elektromotors angeordneten, von einem Getriebegehäuse umgebenen Getriebe und mit einer Bürstenhalterplatte zur Halterung von Bürsten, wobei wenigstens eine auf Masse liegende Massebürste vorhanden ist.

Bei solchen Getriebemotoren werden die Bürsten auf der Bürstenhalterplatte derart gehaltert, dass sie am Umfang eines Stromwandlers des Elektromotors gleiten. Die Massebürste wird dabei über eine in das Getriebegehäuse gestemmte Litze mit dem auf Masse liegenden Getriebegehäuse verstemmt. Dabei kann auch vorgesehen sein, dass ein auf Masse liegendes Masseblech zwischen das Motorengehäuse und das Getriebegehäuse geklemmt wird, wobei dann die Massebürste mit dem Masseblech elektrisch verbunden ist.

Die FR-A-2 750 811 und FR-A-2 754 952 offenbaren einen derartigen Getriebemotor.

Der bekannte Stand der Technik weist dabei den Nachteil auf, dass ein Verstemmen der Litzen im Getriebegehäuse bzw. ein Klemmen des Masseblechs zwischen Motorengehäuse und Getriebegehäuse einer Serienfertigung nicht gerecht wird und zu einer prozessunsicheren Montage führt.

Der vorliegenden Erfindung liegt deshalb die Aufgabe zugrunde, einen Getriebemotor bereitzustellen, bei welchem die Verbindung der Massebürste mit einem auf Masse liegenden Element mit wenig Fertigungs- und Montageaufwand prozess- und funktionssicher realisiert ist.

Diese Aufgabe wird bei einem Getriebemotor der eingangs beschriebenen Art erfindungsgemäß dadurch gelöst, dass ein Steckerelement an der Bürstenhalterplatte vorhanden ist, welches wenigstens einen Bürstenaufnahmeabschnitt zur Aufnahme einer elektrischen Verbindung mit der Massebürste und wenigstens einen Masseaufnahmeabschnitt zur Aufnahme eines auf Masse liegenden Elements aufweist. Die Erfindung weist dabei den Vorteil auf, dass ein Verstemmen der mit den Massebürsten verbundenen Litzen in dem Getriebegehäuse entfällt. Außerdem ist ein Masseblech zwischen Motorengehäuse und Getriebegehäuse nicht erforderlich. Durch Verwendung des Steckerelements an der Bürstenhalterplatte wird erfindungsgemäß erreicht, dass zum einen an dem Bürstenaufnahmeabschnitt eine elektrische Verbindung mit der Massebürste realisiert werden kann. Zum anderen wird der Masseaufnahmeabschnitt mit einem auf Masse liegenden Element verbunden, wodurch die Massebürste ebenfalls auf Masse liegt. Bei der Montage eines derartigen Getriebemotors wird beispielsweise in einer Vormontage die Bürstenhalterplatte mit den einzelnen Bürsten und dem Steckerelement vormontiert. In einem weiteren Montageschritt wird die Bürstenhalterplatte in den Getriebemotor eingesetzt, wobei lediglich der Masseaufnahmeabschnitt des Steckerelements mit einem auf Masse liegenden Element gekoppelt bzw. verbunden werden muss, um die Massebürste auf Masse zu legen.

Eine besonders vorteilhafte Ausgestaltung der Erfindung kennzeichnet sich dadurch, dass die Bürstenhalterplatte einen Steckerdurchbruch aufweist und dass das Steckerelement abschnittsweise durch den Steckerdurchbruch ragt, wobei der Bürstenaufnahmeabschnitt auf der den Bürsten zugewandten Seite der Bürstenhalterplatte und der Masseaufnahmeabschnitt auf der den Bürsten abgewandten Seite der Bürstenhalterplatte angeordnet ist. Dabei wird vorteilhafterweise erreicht, dass der Masseaufnahmeabschnitt räumlich von den Bürsten durch die Bürstenhalterplatte getrennt ist. Dadurch können gegenseitig bedingte Funktionsstörungen zum einen der Bürsten und zum anderen des Masseaufnahmeschnitts bzw. des von dem Masseaufnahmeabschnitt aufgenommenen, auf Masse liegenden Elements, vermieden werden.

Vorteilhafterweise kann vorgesehen sein, dass der Masseaufnahmeabschnitt unmittelbar mit dem auf Masse liegenden Getriebegehäuse lösbar verbunden ist. Dadurch kann der Getriebemotor, insbesondere im Schadensfalle, problemlos demontiert werden. Außerdem entfällt ein den Masseaufnahmeabschnitt mit dem Getriebegehäuse verbindendes Bauteil, wodurch Kosten eingespart werden können.

Es kann weiterhin vorgesehen sein, dass der Masseaufnahmeabschnitt einen an dem Getriebegehäuse angespritzten Steckeranschluss aufnimmt. Durch einen solchen angespritzten, definierten Steckeranschluss kann eine prozess- und funktionssichere Verbindung des Steckerelements mit dem Getriebegehäuse gewährleistet werden.

Eine Weiterbildung der Erfindung sieht vor, dass der Masseaufnahmeabschnitt maulartig mit zwei federelastischen Klauen zur Aufnahme des Steckeranschlusses ausgestaltet ist. Durch Verwendung derartiger Klauen wird eine sichere Verbindung des Aufnahmeabschnitts mit dem Steckeranschluss erreicht. Hierbei können insbesondere Führungsabschnitte an dem Masseaufnahmeabschnitt und/oder dem Steckeranschluss vorgesehen sein, die ein besseres, insbesondere lösbares Aufstecken des Masseaufnahmeabschnitts auf den Steckeranschluss ermöglichen. Dadurch kann eine Serienfertigung prozess- und funktionssicher durchgeführt werden.

Bei einer Variante der Erfindung ist vorgesehen, dass das Steckerelement an der Bürstenhalterplatte geklemmt gehaltert ist. Eine geklemmte Halterung weist dabei den Vorteil auf, dass Schrauben, Nieten, Klebstoffe und dergl. zur Halterung des Steckerelements an der Bürstenhalterplatte nicht benötigt werden. Auch können aufwendige Stemmwerkzeuge zum Verstemmen des Steckerelements an der Bürstenhalterplatte entfallen.

Ferner kann vorteilhafterweise vorgesehen sein, dass das Steckerelement zur geklemmten Halterung in dem mittleren Bereich wenigstens einen abstehenden Vorsprung vorsieht. Durch einen derartigen Vorsprung kann das Steckerelement definiert an der Bürstenhalterplatte angeklemmt werden.

Bei einer anderen Ausgestaltung der Erfindung nimmt der Bürstenaufnahmeabschnitt den Kontakt eines weiteren Bauteils, insbesondere eines Thermoschaltelements auf, welches mit der Massenbürste elektrisch verbunden ist. Die Massebürste liegt damit nicht unmittelbar, sondern mittelbar über das Thermoschaltelement auf Masse.

Eine andere Ausgestaltung der Erfindung sieht vor, dass der Bürstenaufnahmeabschnitt mit der elektrischen Verbindung der Massebürste und/oder mit dem Kontakt des weiteren Bauteils verschweißt oder verlötet ist. Durch ein solches Verschweißen oder Verlöten wird eine dauerhafte Verbindung des Bürstenaufnahmeabschnitts mit der Massebürste bzw. dem weiteren Bauteil auf einfache und kostengünstige Art und Weise realisiert.

Bei einer bevorzugten Ausgestaltungsform der Erfindung ist das Steckerelement aus einem Flachblech gefertigt. Durch entsprechendes Behandeln und Biegen des Flachblechs kann mit relativ wenig Aufwand ein Steckerelement mit den gewünschten Eigenschaften realisiert werden.

Bei einer anderen Weiterbildung der Erfindung ist die Bürstenhalterplatte zwischen Getriebegehäuse und Motorengehäuse geklemmt gehaltert. Vorteilhafterweise sind dabei zur Befestigung der Bürstenhalterplatte keine zusätzlichen Befestigungsmittel, wie beispielsweise Nieten oder Schrauben, erforderlich. Auch ein Verstemmen der Bürstenhalterplatte mit dem Getriebe- oder Motorengehäuse kann entfallen. Insbesondere werden, um eine Gewichtsreduzierung des Getriebemotors zu erreichen, die Getriebe- und/oder Motorengehäuse aus Magnesium oder Aluminium gefertigt. Ein Verstemmen der Bürstenhalterplatten mit derartigen Gehäusen ist zudem nicht prozesssicher. Bei einer derart geklemmten Halterung der Bürstenhalterplatte wird die Bürstenhalterplatte bei der Montage zwischen das Getriebegehäuse und das Motorengehäuse eingelegt. Erfindungsgemäß kann hierbei vorgesehen sein, dass bei einem solchen Einlegen der Masseaufnahmeabschnitt des Steckerelements in beispielsweise in den an dem Getriebegehäuse angespritzten Steckeranschluss geführt wird. Eine solche Montage ist mit minimalem Montageaufwand realisierbar.

Weiterhin kann vorteilhafterweise zwischen der Bürstenhalterplatte und dem Motorengehäuse eine Dichtung vorhanden sein, zwischen der und dem Getriebegehäuse oder dem Motorengehäuse die Bürstenhalterplatte geklemmt gehaltert ist. Die Zwischenschaltung einer derartigen Dichtung bringt den Vorteil mit sich, dass zum einen die Schnittstelle im Motorengehäuse/Getriebegehäuse gegen äußere Umwelteinflüsse abgedichtet ist und dass zum anderen auf die Bürstenhalterplatte wirkende Klemmkräfte gleichmäßig verteilt sind.

Bei einer weiteren bevorzugten Ausgestaltungsform der Erfindung ist die Bürstenhalterplatte aus Hartpapier. Hartpapier hat sich in der Praxis für Bürstenhalterplatten als besonders vorteilhaft erwiesen.

Weitere vorteilhafte Ausgestaltungen und Einzelheiten der Erfindung sind der folgenden Beschreibung zu entnehmen, in der die Erfindung anhand des in der Zeichnung dargestellten Ausführungsbeispiels näher beschrieben und erläutert ist.

Es zeigen:
- Figur 1: einen Wischergetriebemotor für ein Fahrzeug;
- Figur 2: die dem Motorengehäuse zugewandte Seite des Getriebegehäuses des Getriebemotors nach Figur 1;
- Figur 3: eine etwas anders ausgestaltete Ausführung nach Figur 2;
- Figur 4: einen Ausschnitt aus dem Getriebegehäuse des Getriebemotors nach Figur 3; und
- Figur 5: ein erfindungsgemäßes Steckerelement.

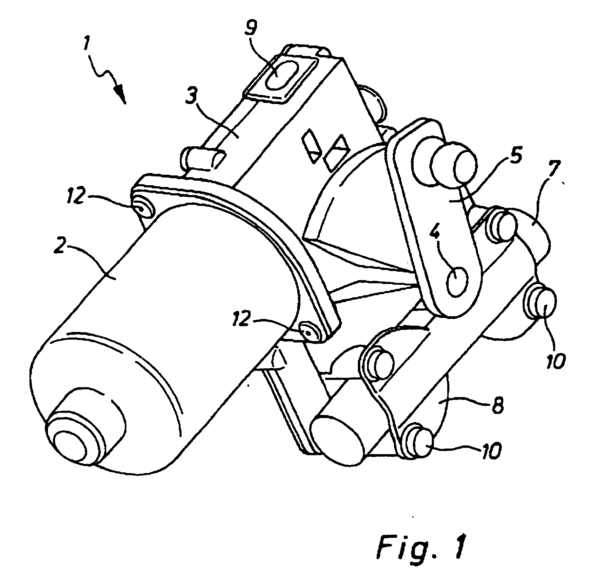

Der in der Fig. 1 gezeigte Getriebemotor 1 einer Wischeranlage für Fahrzeuge weist einen von einem Motorengehäuse 2 umgebenen Elektromotor und ein an der Antriebswelle des Elektromotors angeordnetes, von einem Getriebegehäuse 3 umgebenes Getriebe auf. Der Getriebemotor 1 weist an seiner Abtriebswelle 4 eine Kurbel 5 mit Kugelgelenk auf, die zum Antrieb eines mit dem Kugelgelenk koppelbaren Wischergestänges bzw. von einer Wischereinrichtung zur Wischung von Fahrzeugscheiben vorgesehen ist.

Die Fig.1 zeigt weiterhin einen rohrartigen Träger 7, an welchem über eine Klemmlasche 8 der Getriebemotor 1 befestigt ist. Der Träger 7 ist beispielsweise an der Fahrzeugkarosserie ortsfest angeordnet. Die Klemmlasche 8 ist über vier Befestigungsschrauben 10 an dem Getriebegehäuse 3 angeordnet. Zur weiteren Abstützung des Getriebemotors 1 ist eine Aussparung 9 vorgesehen, in welche beispielsweise ein an dem Fahrzeug ortsfest angeordneter Bolzen eingeführt werden kann. Das Motorengehäuse 2 ist über zwei Nieten 12 mit dem Getriebegehäuse 3 verbunden.

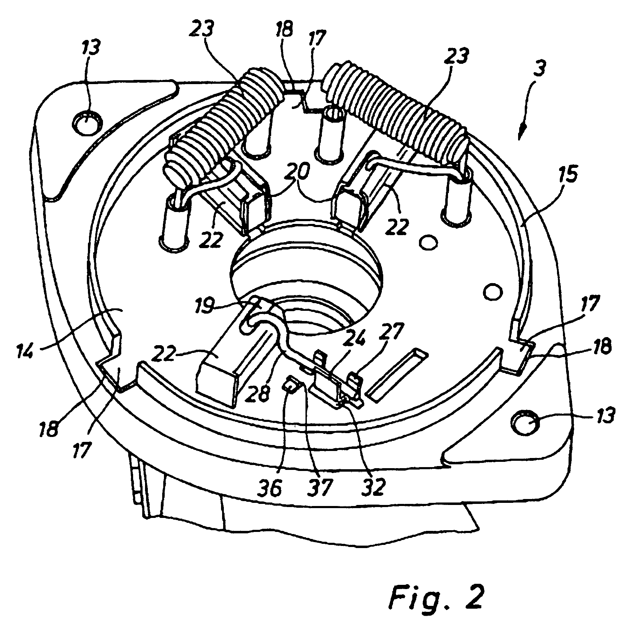

In der Figur 2 ist der dem Motorengehäuse 2 zugewandte Abschnitt des topfförmig ausgebildeten Getriebegehäuses 3 dargestellt. An dem Getriebegehäuse 3 sind zwei Aussparungen 13 zur Aufnahme der in Figur 1 gezeigten Nieten 12 vorhanden. Weiterhin ist eine Bürstenhalterplatte 14 gezeigt, die in das offene Ende des topfförmig ausgestalten Getriebegehäuses 3 eingelegt ist. Dazu weist die Bürstenhalterplatte 14 an der dem Getriebegehäuse 3 zugewandten Stirnseite drei rechteckförmige Laschen 17 auf, die in an dem Getriebegehäuse 3 vorhandene Aussparungen 18 eingelegt sind. Die Aussparungen 18 entsprechen in Form und Größe den Laschen 17, so dass die Laschen 17 die Aussparungen 18 weitgehend ausfüllen und mit der Oberfläche des Getriebegehäuses 3 weitgehend plan abschließen.

Auf der Bürstenhalterplatte 14, die vorzugsweise aus Hartpapier ist, sind eine Massebürste 19 und zwei auf einem höheren Potenzial liegende Kohlebürsten 20 in entsprechenden Halterungen 22 angeordnet. Weiterhin sind über den beiden Kohlebürsten 20 Entstörungsspulen 23 zur Entstörung der beiden Kohlebürsten 20 angeordnet.

Die Bürstenhalterplatte 14 ist dabei ringartig ausgestaltet, wobei die Bürstenhalterplatte 14 weitgehend dem Querschnitt des topfförmigen Getriebegehäuses 3 entspricht. In montiertem Zustand des Getriebemotors 1 ist vorgesehen, dass der Stromwandler des Elektromotors durch die Bürstenhalterplatte 14 hindurchgreift, so dass die Massebürste 19 und die beiden Kohlebürsten 20 an dem Umfang des Stromwandlers gleiten.

In Figur 2 ist außerdem deutlich zu erkennen, dass auf der offenen Seite des topfförmigen Gehäuses 3 ein in Richtung Motorengehäuse 2 weisender Steg 15 vorhanden ist. In dem Bereich, in dem die Aussparungen 18 liegen, weist der Steg 15 Unterbrechungen auf, durch welche es möglich wird, die Bürstenhalterplatte 14 bzw. die Laschen 17 der Bürstenhalterplatte 14 in die Aussparungen 18 einzulegen. Der Steg 15 dient in erster Linie dazu, bei der Montage den Elektromotor mit Motorengehäuse 2 funktionssicher, ohne Beschädigung von Bauteilen, auf das Getriebegehäuse 3 aufzusetzen.

In montiertem Zustand des Getriebemotors 1, bei welchem der Elektromotor mit Motorengehäuse 2 über die Nieten 12 mit dem Getriebegehäuse verbunden ist, wird die Bürstenhalterplatte 14 zwischen dem Motorengehäuse 2 und dem Getriebegehäuse 3 geklemmt gehaltert. Dabei kann insbesondere vorgesehen sein, dass zwischen das Getriebegehäuse 3 und das Motorengehäuse 2 eine Dichtung eingelegt wird, die auf der den Bürsten 19 und 20 abgewandten Seite des umlaufenden Steges 15 angeordnet ist.

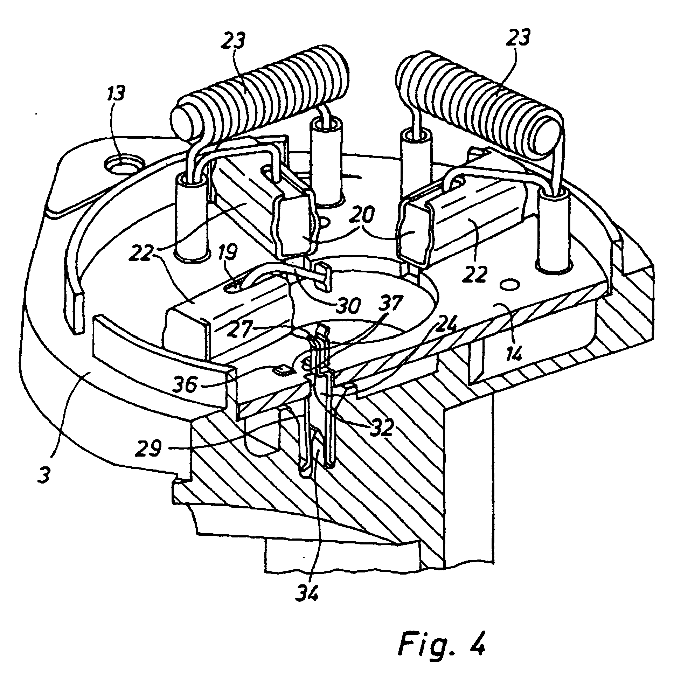

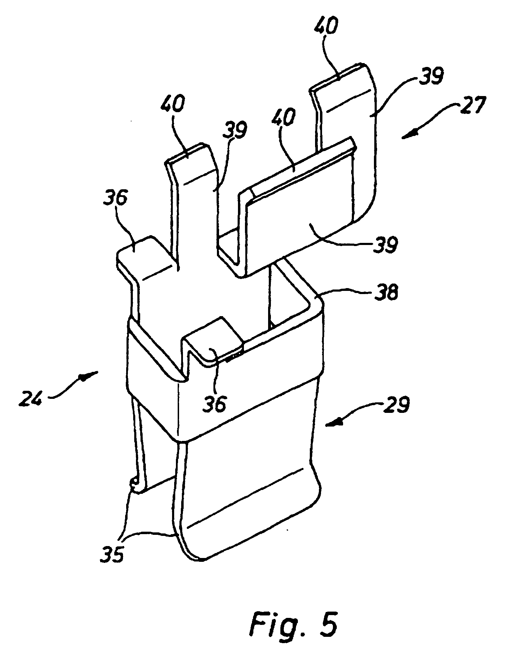

Wie aus Figur 2 deutlich zu erkennen ist, ist an der Bürstenhalterplatte 14 ein Steckerelement 24 vorhanden, welches einen Bürstenaufnahmeabschnitt 27 zur Aufnahme einer elektrischen Verbindung 28 mit der Massebürste 19 aufweist. Außerdem sieht das Steckerelement 24 einen in Figur 4 und 5 dargestellten Masseaufnahmeabschnitt 29 vor, der zur Aufnahme eines auf Masse liegenden Elements vorgesehen ist.

Zur Anbringung des Steckerelements 24 an der Bürstenhalterplatte 14 weist die Bürstenhalterplatte 14 einen Steckerdurchbruch 32 auf. Das Steckerelement 24 ragt dabei abschnittsweise durch den Steckerdurchbruch 32, wobei der Bürstenaufnahmeabschnitt 27 auf der den Bürsten 19 und 20 zugewandten Seite der Bürstenhalterplatte 14 und der Masseaufnahmeabschnitt 29, wie in Figur 5 dargestellt, auf der den Bürsten 19 und 20 abgewandten Seite der Bürstenhalterplatte 14 angeordnet ist.

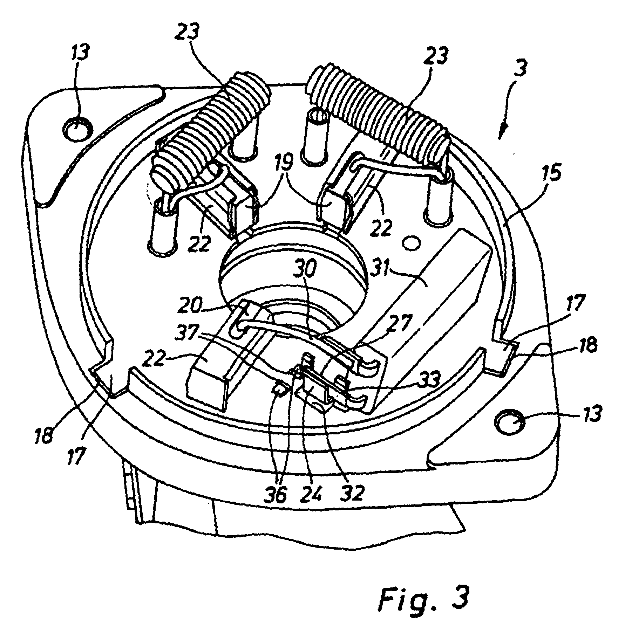

In Figur 3, die weitgehend Figur 2 entspricht, ist die elektrische Verbindung 28 der Massebürste 19 nicht unmittelbar mit dem Bürstenaufnahmeabschnitt 27 des Steckerelements 24 verbunden. Vielmehr ist auf der Bürstenhalteplatte 14 ein weiteres Bauteil, insbesondere ein Thermoschaltelement 31 angeordnet, wobei der Bürstenaufnahmeabschnitt 27 den Kontakt 33 des Thermoschaltelements aufnimmt. Die Massebürste 19 liegt über eine elektrische Verbindung 30 und das Thermoschaltelement 31 an der Masse an. Dabei kann vorgesehen sein, dass der Bürstenaufnahmeabschnitt 27 mit der elektrischen Verbindung 28 der Massebürste 19 nach Figur 2 oder mit dem Kontakt 33 des Thermoschaltelements 31 verschweißt oder verlötet ist.

Die Figur 4 zeigt einen Teilschnitt durch das in Figur 3 gezeigte Getriebegehäuse 3 mit Bürstenhalterplatte 14. Dabei ist deutlich zu erkennen, dass der Masseaufnahmeabschnitt 29 des Steckerelements 24 unmittelbar mit dem auf Masse liegenden Getriebegehäuse 3 lösbar verbunden ist. Das Getriebegehäuse 3 weist dabei einen angespritzten Steckeranschluss 34 auf, der von dem Masseaufnahmeabschnitt 29 aufgenommen wird. Der Masseaufnahmeabschnitt 29 ist, wie insbesondere auch in Figur 5 gut zu erkennen ist, maulartig mit zwei federelastischen Klauen 35 zur Aufnahme des Steckeranschlusses 34 ausgestaltet.

Zur Montage des Getriebemotors 1 wird die Bürstenhalterplatte 14 in die topfförmige Öffnung des Getriebegehäuses 3 eingelegt. Dabei nimmt der maulartige Aufnahmeabschnitt 29 den Steckeranschluss 34, der an der der Bürstenhalterplatte 14 zugewandten Seite zur besseren Aufnahme des Aufnahmeabschnitts 29 angefast ist, auf. Mit Einlegen der Bürstenhalterplatte 14 erfolgt demnach die Verbindung der Massebürste 19 mit dem auf Masse liegenden Getriebegehäuse 3.

Zur Halterung des Steckerelements 24 an der Bürstenhalterplatte 14 weist das Steckerelement 24 in dem mittleren Bereich zwei abstehende Vorsprünge 36 auf, die insbesondere in Figur 5 gut zu erkennen sind. Zur Montage des Steckerelements 24 weist die Bürstenhalterplatte 14 Aussparungen 37 auf, durch welche die Vorsprünge 36, die vor Montage des Steckerelements 24 nicht rechtwinklig abstehen, sondern in Längsrichtung des Steckerelements 24 gerichtet sind, geführt werden. In einem nächsten Montageschritt werden die Vorsprünge 36 abgebogen, wodurch das Steckerelement 24 an der Bürstenhalterplatte 14 geklemmt gehaltert wird.

Aus Figur 5 wird deutlich, wie das Steckerelement 24 aufgebaut ist. An den maulartigen, die beiden Klauen 35 aufweisenden Masseaufnahmeabschnitt 29, schließt sich ein ein Rechteckprofil aufweisender Abschnitt 38 an. An der den Klauen 35 abgewandten Stirnseite dieses Abschnitts 38 sind die Vorsprünge 36 sowie der Bürstenaufnahmeabschnitt 27 angeordnet. Der Bürstenaufnahmeabschnitt 27 weist insgesamt drei Teilabschnitte 39 auf, wobei zwei Teilabschnitte 39 in einer Ebene liegen und der dritte Teilabschnitt 39 parallel zu den ersten beiden Teilabschnitten 39 angeordnet ist. Alle Teilabschnitte 39 weisen zur leichteren Einführbarkeit der elektrischen Verbindung 28 oder des Kontakts 33 des Thermoschaltelements 31 sich aufweitende Endabschnitte 40 auf. Vorteilhafterweise kann durch eine solche Ausgestaltung des Steckerelements 24 das Steckerelement aus einem Flachblech durch entsprechende Biegung gefertigt werden.

Alle in der Beschreibung, den nachfolgenden Ansprüchen und der Zeichnung dargestellten Merkmale können sowohl einzeln, als auch in beliebiger Kombination miteinander erfindungswesentlich sein.

## Patentansprüche

1. Getriebemotor (1), insbesondere Wischergetriebemotor für ein Fahrzeug, mit einem von einem Motorengehäuse (2) umgebenen Elektromotor, mit einem an der Antriebswelle des Elektromotors angeordneten, von einem Getriebegehäuse (3) umgebenen Getriebe und mit einer Bürstenhalterplatte (14) zur Halterung von Bürsten (19, 20), wobei wenigstens eine auf Masse liegende Massebürste (19) vorhanden ist, **dadurch gekennzeichnet, dass** ein Steckerelement (24) an der Bürstenhalterplatte (14) vorhanden ist, welches wenigstens einen Bürstenaufnahmeabschnitt (27) zur Aufnahme einer elektrischen Verbindung (28) mit der Massebürste (19) und wenigstens einen Masseaufnahmeabschnitt (29) zur Aufnahme eines auf Masse liegenden Elements aufweist.

2. Getriebemotor (1) nach Anspruch 1, **dadurch gekennzeichnet, dass** die Bürstenhalterplatte (14) einen Steckerdurchbruch (32) aufweist und dass das Steckerelement (24) abschnittsweise durch den Steckerdurchbruch (32) ragt, wobei der Bürstenaufnahmeabschnitt (27) auf der den Bürsten (19, 20) zugewandten Seite der Bürstenhalterplatte (14) und der Masseaufnahmeabschnitt (29) auf der den Bürsten (19, 20) abgewandten Seite der Bürstenhalterplatte (14) angeordnet ist.

3. Getriebemotor (1) nach Anspruch 1 oder 2, **dadurch gekennzeichnet, dass** der Masseaufnahmeabschnitt (29) unmittelbar mit dem auf Masse liegenden Getriebegehäuse (3) lösbar verbunden ist.

4. Getriebemotor (1) nach Anspruch 3, **dadurch gekennzeichnet, dass** der Masseaufnahmeabschnitt (29) einen an dem Getriebegehäuse (3) angespritzten Steckeranschluss (34) aufnimmt.

5. Getriebemotor (1) nach Anspruch 4, **dadurch gekennzeichnet, dass** der Masseaufnahmeabschnitt (29) maulartig mit zwei federelastischen Klauen (35) zur Aufnahme des Steckeranschlusses (34) ausgestaltet ist.

6. Getriebemotor (1) nach einem der vorhergehenden Ansprüche, **dadurch gekennzeichnet, dass** das Steckerelement (24) an der Bürstenhalterplatte (14) geklemmt gehaltert ist.

7. Getriebemotor (1) nach Anspruch 6, **dadurch gekennzeichnet, dass** das Steckerelement (24) zur geklemmten Halterung in dem mittleren Bereich wenigstens einen abstehenden Vorsprung (36) vorsieht.

8. Getriebemotor (1) nach einem der vorhergehenden Ansprüche, **dadurch gekennzeichnet, dass** der Bürstenaufnahmeabschnitt (27) den Kontakt eines weiteren Bauteils, insbesondere eines Thermoschaltelements (31) aufnimmt, welches mit der Massebürste (19) elektrisch verbunden ist.

9. Getriebemotor (1) nach einem der vorhergehenden Ansprüche, **dadurch gekennzeichnet, dass** der Bürstenaufnahmeabschnitt (27) mit der elektrischen Verbindung (28) der Massebürste (19) und/oder mit dem Kontakt (33) des weiteren Bauteils (31) verschweißt oder verlötet ist.

10. Getriebemotor (1) nach einem der vorhergehenden Ansprüche, **dadurch gekennzeichnet, dass** das Steckerlement (24) aus einem Flachblech gefertigt ist.

11. Getriebemotor (1) nach einem der vorhergehenden Ansprüche, **dadurch gekennzeichnet, dass** die Bürstenhalterplatte (14) zwischen Getriebegehäuse (3) und Motorengehäuse (2) geklemmt gehaltert ist.

12. Getriebemotor (1) nach einem der vorhergehenden Ansprüche, **dadurch gekennzeichnet, dass** zwischen der Bürstenhalteplatte (14) und dem Motorengehäuse (2) eine Dichtung vorhanden ist, zwischen der und dem Getriebegehäuse (3) oder dem Motorengehäuse (2) die Bürstenhalterplatte (14) geklemmt gehaltert ist.

13. Getriebemotor (1) nach einem der vorhergehenden Ansprüche, **dadurch gekennzeichnet, dass** die Bürstenhalterplatte (14) aus Hartpapier ist.

## Claims

1. Geared motor (1), in particular geared wiper motor for a vehicle, comprising an electric motor which is enclosed by a motor housing (2), a gear mechanism which is arranged on the drive shaft of the electric motor and is enclosed by a gear mechanism housing (3), and a brush mounting plate (14) for holding brushes (19, 20), wherein at least one ground brush (19) is provided which is connected to ground, **characterized in that** a connector element (24) is provided on the brush mounting plate (14), said connector element having at least one brush accommodating section (27) for accommodating an electrical connection (28) to the ground brush (19) and at least one ground accommodating section (29) for accommodating an element which is connected to ground.

2. Geared motor (1) according to Claim 1, **characterized in that** the brush mounting plate (14) has a connector opening (32) and **in that** the connector element (24) partially protrudes through the connector opening (32), wherein the brush accommodating section (27) is arranged on the side of the brush mounting plate (14) which faces the brushes (19, 20) and the ground accommodating section (29) is arranged on the side of the brush mounting plate (14) which is remote from the brushes (19, 20).

3. Geared motor (1) according to Claim 1 or 2, **characterized in that** the ground accommodating section (29) is directly connected in a releasable manner to the gear mechanism housing (3) which is grounded.

4. Geared motor (1) according to Claim 3, **characterized in that** the ground accommodating section (29) accommodates a plug connector (34) which is injection-moulded on the gear mechanism housing (3).

5. Geared motor (1) according to Claim 4, **characterized in that** the ground accommodating section (29) is configured in a jaw-like manner with two resilient claws (35) for accommodating the plug connector (34).

6. Geared motor (1) according to any one of the preceding claims, **characterized in that** the connector element (24) is secured to the brush mounting plate (14) in a clamped manner.

7. Geared motor (1) according to Claim 6, **characterized in that** the connector element (24) has at least one projecting protrusion (36) in the central region for securing it in a clamped manner.

8. Geared motor (1) according to any one of the preceding claims, **characterized in that** the brush accommodating section (27) accommodates the contact of a further component, in particular a thermal switch element (31), which is electrically connected to the ground brush (19).

9. Geared motor (1) according to any one of the preceding claims, **characterized in that** the brush accommodating section (27) is welded or soldered to the electrical connection (28) of the ground brush (19) and/or to the contact (33) of the further component (31).

10. Geared motor (1) according to any one of the preceding claims, **characterized in that** the connector element (24) is made of a flat sheet of metal.

11. Geared motor (1) according to any one of the preceding claims, **characterized in that** the brush mounting plate (14) is secured in a clamped manner between the gear mechanism housing (3) and the motor housing (2).

12. Geared motor (1) according to any one of the preceding claims, **characterized in that** a seal is provided between the brush mounting plate (14) and the motor housing (2), with the brush mounting plate (14) being secured in a clamped manner between said seal and the gear mechanism housing (3) or the motor housing (2).

13. Geared motor (1) according to any one of the preceding claims, **characterized in that** the brush mounting plate (14) is made of paper laminate.

## Revendications

1. Motoréducteur (1), en particulier motoréducteur d'essuie-glace pour véhicule, comportant un moteur électrique entouré par un carter de moteur (2), comportant un engrenage disposé sur l'arbre primaire du moteur électrique, entouré par un carter d'engrenage (3) et comportant une plaque porte-balais (14) pour la fixation de balais (19, 20), moyennant quoi est prévu au moins un balais de masse (19) se trouvant à la masse, **caractérisé en ce que** sur la plaque porte-balais (14) se trouve un élément connecteur (24) qui présente au moins une section de logement de balais (27) pour le logement d'une connexion électrique (28) avec le balai de masse et au moins une section de logement de la masse (29) pour le logement d'un élément se trouvant à la masse.

2. Motoréducteur (1) selon la revendication 1, **caractérisé en ce que** la plaque porte-balais (14) présente un orifice (32) de passage du connecteur et **en ce que** l'élément connecteur (24) dépasse par l'orifice (32) de passage du connecteur, la section de logement de balais (27) étant disposée sur la face de la plaque porte-balais (14) tournée vers les balais (19, 20) et la section de logement de la masse (29) étant disposée sur la face de la plaque porte-balais (14) opposée aux balais (19, 20).

3. Motoréducteur (1) selon la revendication 1 ou 2, **caractérisé en ce que** la section de logement de la masse (29) est connectée directement au carter d'engrenage (3) se trouvant à la masse.

4. Motoréducteur (1) selon la revendication 3, **caractérisé en ce que** la section de logement de la masse (29) loge une prise embrochable (34) moulée par injection sur le carter d'engrenage (3).

5. Motoréducteur (1) selon la revendication 4, **caractérisé en ce que** la section de logement de la masse (29) est conçues en forme de mâchoire comportant deux mors élastiques (35) pour le logement de la prise embrochable (34).

6. Motoréducteur (1) selon une des revendications précédentes, **caractérisé en ce que** l'élément connecteur (24) est fixé sur la plaque porte-balais (14) par serrage.

7. Motoréducteur (1) selon la revendication 6, **caractérisé en ce que** l'élément connecteur (24) présente, dans sa partie centrale, au moins un épaulement en saillie (36).

8. Motoréducteur selon une des revendications précédentes, **caractérisé en ce que** la section de logement de balais (27) loge le contact d'une pièce supplémentaire, en particulier d'un élément de thermocontact (31) qui est connecté électriquement au balai de masse (19).

9. Motoréducteur (1) selon une des revendications précédentes, **caractérisé en ce que** la section de logement de balais (27) est soudée ou brasée à la connexion électrique (28) du balai de masse (19) et/ou au contact (33) de la pièce supplémentaire (31).

10. Motoréducteur (1) selon une des revendications précédentes, **caractérisé en ce que** l'élément connecteur (24) est fabriqué en tôle plate.

11. Motoréducteur (1) selon une des revendications précédentes, **caractérisé en ce que** la plaque porte-balais (14) est fixée par serrage entre le carter d'engrenage (3) et le carter de moteur (2).

12. Motoréducteur (1) selon une des revendications précédentes, **caractérisé en ce qu'**entre la plaque porte-balais (14) et le carter de moteur (2) se trouve un joint d'étanchéité, la plaque porte-balais (14) étant fixée entre ce dernier et le carter d'engrenage (3) ou le carter de moteur (2).

13. Motoréducteur (1) selon une des revendications précédentes, **caractérisé en ce que** la plaque porte-balais (14) est constituée de papier stratifié.
